# EUROPEAN PATENT SPECIFICATION

(11) **EP 1 494 969 B1**
(45) Date of publication and mention of the grant of the patent: **08.06.2016**
(21) Application number: 02714412.0
(22) Date of filing: 08.04.2002
(51) Int. Cl.: C01G 51/00, H01M 4/525, C01G 53/00, H01M 10/0525

(54) **PROCESS FOR PREPARING CATHODE MATERIAL FOR LITHIUM BATTERIES**
VERFAHREN ZUR HERSTELLUNG VON KATHODENMATERIAL FÜR LITHIUMZELLEN
PROCEDE DE PREPARATION DE MATERIAU POUR CATHODES DE PILES AU LITHIUM

(43) Date of publication of application: 12.01.2005
(73) Proprietor: Council of Scientific and Industrial Research, New Delhi 100 001 (IN)
(72) Inventor: RAMASAMY, Chandrasekaran, Karaikudi 630 003, Tamil Nadu (IN); THIAGARAJAN, Vasudevan, Karaikudi 630 003, Tamil Nadu (IN); ARIYANAN, Mani, Karaikudi 630 003, Tamil Nadu (IN); RAMAIYER, Gangadharan, Karaikudi 630 003, Tamil Nadu (IN)
(74) Representative: Regimbeau
(86) International application number: PCT/IN2002/000102
(87) International publication number: WO 2003/086975

(56) References cited:
- EP-A- 0 653 797
- WO-A-97/48645
- US-A- 6 054 110
- PATENT ABSTRACTS OF JAPAN vol. 1995, no. 09, 31 October 1995 (1995-10-31) -& JP 07 153466 A (MITSUI TOATSU CHEM INC), 16 June 1995 (1995-06-16)
- PATENT ABSTRACTS OF JAPAN vol. 1999, no. 01, 29 January 1999 (1999-01-29) -& JP 10 279315 A (ISE KAGAKU KOGYO KK), 20 October 1998 (1998-10-20)
- DATABASE WPI Section Ch, Week 197711 Derwent Publications Ltd., London, GB; Class E31, AN 1977-19009Y XP002224553 -& JP 52 014597 A (NIPPON CHEM IND CO LTD) , 3 February 1977 (1977-02-03)
- DATABASE WPI Section Ch, Week 200162 Derwent Publications Ltd., London, GB; Class E37, AN 2001-555914 XP002224554 & KR 2001 028 040 A (POHANG IND SCI RES INST), 6 April 2001 (2001-04-06)
- KINGSLEY J J ET AL: "COMBUSTION SYNTHESIS OF FINE-PARTICLE METAL ALUMINATES" JOURNAL OF MATERIALS SCIENCE, CHAPMAN AND HALL LTD. LONDON, GB, vol. 25, no. 2B, 1 February 1990 (1990-02-01), pages 1305-1312, XP000128507 ISSN: 0022-2461
- PATENT ABSTRACTS OF JAPAN vol. 017, no. 022 (E-1307), 14 January 1993 (1993-01-14) & JP 04 249074 A (SONY CORP), 4 September 1992 (1992-09-04)
- BRONGER W. ET AL: "Zur Kenntnis der Niccolate der Alkalimetalle", ZEITSCHRIFT FÜR ANORGANISCHE UND ALLGEMEINE CHEMIE, vol. 333, 1964, pages 188-200,
- MIGEON H.-N. ET AL: "Préparation et étude des phases Li(1.5+x)Co(1.5-x)O3 .alpha. et .beta. (0<=x=<0,35)", BULLETIN DE LA SOCIETE CHIMIQUE DE FRANCE, no. 11-12, 1975, pages 2426-2430,
- MOHAN RAHO ET AL: "High-temperature combustion synthesis and electrochemical characterization of LiNiO2, LiCoO2 and LiMn2O4 for lithium-ion secondary batteries", JOURNAL OF SOLID STATE ELECTROCHEMISTRY, SPRINGER, BERLIN, DE, vol. 5, 1 January 2001 (2001-01-01), pages 348-354, XP002481927, ISSN: 1432-8488, DOI: DOI:10.1007/S100080000157 [retrieved on 2001-04-19]
- P. PERIASAMY ET AL: 'Solid-state synthesis and characterization of LiCoO2 and LiNiyCo1-y solid solutions' BULLETIN OF MATERIALS SCIENCE vol. 23, no. 5, 01 October 2000, pages 345 - 348, XP055042800 DOI: 10.1007/BF02708382 ISSN: 0250-4707

## Description

### Field of the invention

The present invention relates to a novel process based on solid state thermal reaction for the preparation of cathode materials for lithium secondary batteries such as rocking chair and intercalated batteries.

### Background of the invention

Lithium compounds such as lithium cobaltate (LiCoO₂) and lithium nickelate (LiNO₂) are widely used as cathode material for both lithium secondary cells and thin film micro-batteries due to its high reversibility to lithium ions, high cell capacity and less fading capacity over LiMn₂O₄.

In general, lithium cobaltate materials are prepared by solid state thermal method and soft chemistry (like sol-gel) methods. The common materials for the preparation of this cathode lithium cobaltate (LiCoO₂) are any one of the lithium salts viz. lithium nitrate or lithium hydroxide, lithium acetate lithium carbonate with cobalt nitrate or cobalt oxide. Soft chemistry methods are mainly used to prepare the intercalation compounds at low temperatures and to reduce the particle size of the compounds. But the soft chemistry routes are multi-step procedures, prolonged time for calcination and expensive. Prolonged heating time, mechanical grinding and intermittent cooling are major drawbacks of solid state thermal procedures. Other preparation methods are also available in literature for preparation of lithium cobaltate like pulsed laser deposition, sputtering and electrostatic spray deposition. Lithium nickelate is also useful as a cathode in lithium secondary cells of high voltage to replace present low energy density secondary storage cells. In the art it is known to prepare lithium nickelate by reacting lithium nitrate, or lithium hydroxides or any other lithium salts with lithium nitrates, acetates, hydroxides or sulphates by a sol-gel process at a temperature in the range of 350 - 500°C. However, separation of the final product requires several steps.

In the preparation of intercalation compounds, any one of the following disadvantages are observed in the above conventional procedures.
1. Side reactions occur i.e., unexpected product.
2. Unreacted material is left behind which acts as impurity.
3. Partial reactions occur.
4. Several steps are needed for preparation.
5. Controlled conditions required.
6. Long calcination time
7. Nonhomogeneous reactant distribution during heating i.e., undesirable phases are formed.

### Reference:

1. "Synthesis and electrochemical properties of LiCoO2 spinel cathodes"-S. Chol and A. Manthiram, Journal of the Electrochemical Society, Vol. 149(2) (2002) A162-166*.*
2. "Fabrication of LiCoO2 thin films by sol-gel method and characterization as positive electrodes for Li/ LiCoO2 cells " -M.N. Kim, H. Chung, Y. Park, J. Kim, J. Son, K. Park and H. Kim, Journal of Power Sources, Vol. 99(2001) 34-40*.*
3. "High temperature combustion synthesis and electrochemical characterization of LiNiO2, LiCoO2 and LiMn2O4 for lithium ion secondary batteries " - M.M. Rao, C. Liebenow, M. Jayalakshmi, M. Wulff, U. Guth and F. Scholz, Journal of Solid State Electrochemistry, Vol. 5, Issue 5(2001) 348-354*.*
4. "Lithiated cobaltates for lithium - ion batteries- Structure, morphology and electrochemistry of oxides grown by solid state reaction, wet chemistry and film deposition" C. Julien and S. Gastro-Garcia, Journal of Power Sources, Vol. 97-98 (2001) 290-293*.*
5. "Electrochemical characterization of layered LiCoO2 films prepared by electrostatic deposition", Won-Sub Yoon, Sung-Ho Ban, Kyung-Keun Lee, Kwang-Bum Kim, Min Dyu Kim and Jay Min Lee, Journal of Power Sources, Vol. 97-98 (2001) 282-286*.*
6. "Emulsion-derived lithium manganese oxide powder for positive electrodes in lithium ion batteries" Chung-Hsin Lu and Shang-Wei Lin, Journal of Power Sources, Vol. 93 (2001) 14-19*.*
7. "Cobalt doped chromium oxides as cathode materials for secondary. batteries for secondary lithium batteries" Dong Zhang, Branko N. Popov, Yury M. Poddrahansky, Pankaj Arora and Ralph E. White, Journal of Power Sources, Vol. 83 (1999) 121-127*.*
8. "Synthesis and electrochemical studies of spinel phase LiMn2O4 cathode materials prepared by the Pechini process"- W. Liu, G.C. Farrington, F. Chaput and B. Dunn, Journal of the Electrochemical Society., Vol. 143, No.3(1996) 879-884*.*
9. "Synthesis of electrochemical characterisation of LiMO2 (M = Ni, Ni0.75Co0.25) for rechargeable lithium ion batteries", Chun-Chieh Chang, N. Scarr and P. M. Kumta, J. of Solid State Ionics, Vol 112, 329 - 344 (1998).
10. "Structural and electrochemical properties of LiNi0.3Co0.7O2 synthesized by different low temperature techniques", C. Julien, S. S. Michael and S. Ziolkewicz, International Journal of Materials, Vol. 1 (1999), 29 - 37
11. "Synthesis and characterisation of LiCoNi(1-y)VO4 lithium insertion materials", S. Panero, P. Reale, F. Bonno, B. Serosati, M. Arrabito, D. Mazza and N. Pennazi, J. of Solid State Ionics", Vol. 128, 43 - 52, (2000)
12. "Preparation nad characterisation of high density spherical LiNi0.8CoO2 cathode material for lithium secondary batteries", Jierond Ying, Chunrong Wan, Changyin Jiang and Yangxing Li, J. of Power Sources" Vol 99, (2001), 78 - 84
13. "High temperature combustion synthesis and electrochemical characterisation of LiNiO2, LiCoO2 and LiMn2O4 for lithium ion secondary batteries", M. M. Rao, C.Liebnow, M. layalakshmi, M. Wulff, U. Guth and F. Scholz, J. of Solid State Electrochemistry", Vol 5, Issue 5, 348-354 (2001)
13. "Préparation et étude des phases Li(1.5+x)Co(1.5-x)03 .alpha. et .beta. (0 =<x=< 0.35)", Migeon H.-N. et al, Bulletin de la Société Chimique de France, No. 11-12 ,(1975), pages 2426-2430

### Objects of the invention

The main object of the invention is to provide a process for the preparation of lithium cathode materials which overcomes the disadvantages of the prior art enumerated above.

It is another object of the invention, to provide a process for the manufacture of lithium cathode materials which does not involve the formation of side products.

It is a further object of the invention to provide a process for the manufacture of lithium cathode materials which does not result in impurities.

It is a further object of the invention to provide a process for the manufacture of lithium cathode materials which does not involve a multiplicity of steps.

### Summary of the invention

Accordingly the present invention relates to a solid state thermal process for the preparation of lithium cathode materials of the general formula LiMO₂ where M is Co comprising reacting solid lithium oxide (Li₂O) with Co₃O₄ under controlled conditions according to claim 1.

In one embodiment of the invention, the metal oxide is Co₃O₄ and the lithium oxide and the cobalt oxide are mixed in stoichiometric condition.

In another embodiment of the invention, the reactants are heated at a temperature in the range of 450 to 750°C.

In a further embodiment of the invention, the reactants are of analytical reagent grade.

In a further embodiment of the invention, urea or ammonium nitrate is added to the reaction mixture of lithium oxide and cobalt oxide as self heat generating materials and ground well.

In yet another embodiment of the invention the ratio of Li₂O + Co₃O₄ mixture and urea or ammonium nitrate additive is 1:3.

In a further embodiment of the invention, the process comprises mixing solid lithium oxide and cobalt oxide, mixing urea in the resultant mixture and grinding the final mixture, introducing the resultant mixture in a furnace and heating at a temperature in the range of 450 to 750°C to obtain lithium cobaltate.

In one embodiment of the invention, the Li₂O is mixed with Co₃O₄ in the following preferred proportions Li₂O: Co₃O₄ = 0.16: 0.84 (for 1 gram)

### Detailed description of the invention

The present invention provides a simple single step reaction for the preparation of cathode materials for lithium secondary cells such as lithium cobaltate and lithium nickelate. The process comprises solid state mixing of the lithium oxide with the corresponding metal compound and heating with the addition of urea or ammonium nitrate. The preferred temperature range for the heating which is carried out continuously in a furnace is 450 to 750°C for a period of H about 8 hours. The products formed were examined by X-ray diffraction for confirmation. The following reaction occurs during the thermal process when the metal is cobalt.

3Li₂O + 2Co₃O₄ + (O) → 6LiCoO₂

Li₂O is mixed with Co₃O₄ in the following desired proportions Li₂O : Co₃O₄ = 0.16: 0.84 (for 1 gram). It is preferred that the reaction takes place in an electric furnace. The materials used are all in the solid state.

### Preparation of LiCoO₂ through solid state thermal reaction:

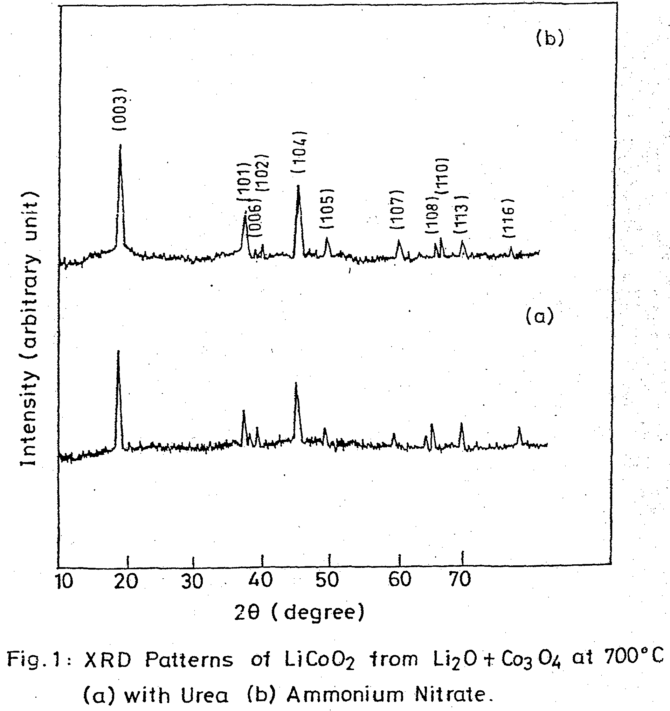

(A) Li₂O solid state material is allowed to react with solid Co₃O₄ under controlled conditions at moderate temperature which yields fairly very good sample of spinel structure useful as a very good intercalating cathode. Stoichiometric amount of Pure AR sample of Co₃O₄ is mixed with pure AR sample of Li₂O in the cationic ratio of Li:Co is (1:1) for the preparation of LiCoO₂. This mixture is thoroughly mixed with urea in the ratio of 1:3 (mixture: urea). This uniform mixture was preheated at 300°C for 3 hours. In order to obtain a better homogeneous mixture, this mixture is ground well with double distilled water free ethylene carbonate (EC). This mixture was again heated to 700°C for 5 hours continuously to yield lithium cobaltate (LiCoO₂) which is evidenced by X-ray analysis (Figure 1a).
(B) Li₂O solid state material is allowed to react with solid Co₃O₄ under controlled conditions at moderate temperature which yields fairly very good sample of spinel structure useful as a very good intercalating cathode. Stoichiometric amount of Pure AR sample of Co₃O₄ and pure AR sample of Li₂O in the cationic ratio of Li:Co is (1:1) for the preparation of LiCoO₂. This mixture is thoroughly mixed with ammonium nitrate in the ratio of 1:3 (mixture: ammonium nitrate). This uniform mixture was preheated at 300°C for 3 hours. In order to obtain a better homogeneous mixture, this mixture is ground well with double distilled water free ethylene carbonate (EC). Again this mixture was heated to 700°C for 5 hours continuously to yield lithium cobaltate (LiCoO₂) which is evidenced by X-ray analysis (Figure 1b).

The following reaction occurs during the thermal process.

3Li₂O + 2Co₃O₄ + (O) → 6LiCoO₂

The following examples are given by way of illustration and therefore should not be construed to limit the scope of the present invention.

### Example-1

AR pure dry Li₂O is mixed with AR pure dry Co₃O₄ in the ratio of 0.16: 0.84 in a pestle and mortar arrangement and then the mix is further mixed with 3 times the weight of urea and then introduced in an electric furnace. This mixture was heated first for 3 hours at 300°C and then again heated at 700°C for 5 hours.

| Components | Compositions |
|---|---|
| Li₂O | 0.16 g* |
| Co₃O₄ | 0.84 g* |
| Urea | 3.00 g |
| Pre heating temperature | 300°C |
| Final temperature | 700°C |
| Time | 8 hours |
| Particle size of the product | 10-20 µm |
| Nature of the product | Black |
| Efficiency of the process | > 90% |

### Example-2

Pure dry AR Li₂O is mixed with pure dry AR Co₃O₄ in the molar ratio of 0.16: 0.84 in a pestle and mortar arrangement and then the mix is further mixed with 3 times the weight of ammonium nitrate. The final mixture was heated first for 3 hours at 300°C and then heated at 700°C for 5 hours.

| Components | Compositions |
|---|---|
| Li₂O | 0.16 g* |
| Co₃O₄ | 0.84 g* |
| Ammonium nitrate | 3.00 g |
| Pre heating.temperature | 300°C |
| Final temperature | 700°C |
| Time | 8 hours |
| Particle size of the product | 10-20 µm |
| Nature of the product | Black |
| Efficiency of the process | 90% |

| | |
|---|---|
| *molecular weight ratio | |

**The main advantages of the present invention are**
1. It is a single step solid state thermal process.
2. Li₂O is used to react with Co₃O₄ to form LiCoO₂. of high capacity cathode for intercalation.
3. Heating time is considerably less, and hence considerable-heating time can be saved.

## Claims

1. A solid state thermal process for the preparation of LiCoO₂, comprising:
reacting Li₂O with Co₃O₄ in solid state;
adding urea or ammonium nitrate to the mixture of Li₂O and Co₃O₄ to obtain a reaction mixture; and grinding the reaction mixture;
wherein Li₂O and Co₃O₄ are heated at a temperature in the range of 450 to 750°C.

2. The solid state thermal process of claim 1, wherein the ratio of Li₂O + Co₃O₄ mixture and urea or ammonium nitrate additive is 1:3.

3. The solid state thermal process of claim 1, wherein Li₂O and Co₃O₄ are mixed in the following proportion Li₂O:Co₃O₄ = 0.16:0.84 per gram.

## Patentansprüche

1. Thermisches Festkörperverfahren zur Herstellung von LiCoO₂, aufweisend:
Umsetzen von Li₂O mit Co₃O₄ in festem Zustand;
Zugeben von Harnstoff oder Ammoniumnitrat zur Mischung von Li₂O und Co₃O₄, um eine Reaktionsmischung zu erhalten;
und Mahlen der Reaktionsmischung;
wobei Li₂O und Co₃O₄, bei einer Temperatur im Bereich von 450 bis 750 °C erhitzt werden.

2. Thermisches Festkörperverfahren nach Anspruch 1, wobei das Verhältnis der Mischung von Li₂O + Co₃O₄ und Harnstoff- oder Ammoniumnitrat-Zugabe 1:3 beträgt.

3. Thermisches Festkörperverfahren nach Anspruch 1, wobei Li₂O und Co₃O₄ im folgenden Verhältnis Li₂O:Co₃O₄ gemischt werden = 0,16:0,84 je Gramm.

## Revendications

1. Procédé thermique à l'état solide pour la préparation de LiCoO₂, comprenant les étapes consistant à :
faire réagir le LiO₂ avec le Co₃O₄ à l'état solide ;
ajouter l'urée ou le nitrate d'ammonium au mélange de LiO₂ et de Co₃O₄ pour obtenir un mélange réactionnel ; et broyer le mélange réactionnel ;
dans lequel le LiO₂ et le Co₃O₄ sont chauffés à une température située dans la plage de 450 à 750°C.

2. Procédé thermique à l'état solide selon la revendication 1, dans lequel le rapport du mélange de LiO₂ + Co₃O₄ et de l'additif urée ou nitrate d'ammonium est de 1:3.

3. Procédé thermique à l'état solide selon la revendication 1, dans lequel le LiO₂ et le Co₃O₄ sont mélangés en la proportion suivante LiO₂:Co₃O₄ = 0,16:0,84 par gramme.
